# FASCICULE DE BREVET EUROPEEN

(11) **EP 2 376 805 B1**
(45) Date de publication et mention de la délivrance du brevet: **26.06.2013**
(21) Numéro de dépôt: 10706008.9
(22) Date de dépôt: 05.01.2010
(51) Int. Cl.: F16H 1/32, F16H 57/02, F02C 6/20, B64D 27/26

(54) **Turbomoteur d'aéronef, utilisation de ce turbomoteur, et aéronef associé**
Flugzeugtriebwerk, Verwendung eines solchen Triebwerks, und zugehöriges Flugzeug
Aircraft turbine engine, use of such a turbine engine, and corresponding aircraft

(30) Priorité: 07.01.2009 FR 0900032
(43) Date de publication de la demande: 19.10.2011
(73) Titulaire: Airbus Operations (S.A.S.), 31060 Toulouse (FR)
(72) Inventeur: MARCHE, Jacques Hervé, F-31200 Toulouse (FR)
(74) Mandataire: Hauer, Bernard
(86) Numéro de dépôt international: PCT/FR2010/050004
(87) Numéro de publication internationale: WO 2010/079294

(56) Documents cités:
- EP-A2- 0 798 207
- DE-A1- 2 903 389
- FR-A- 1 405 188
- FR-A1- 2 791 319
- US-A- 4 598 543

## Description

La présente invention concerne un turbomoteur d'aéronef, ainsi que l'utilisation d'un tel turbomoteur, divulgué par exemple par FR1405188.

On sait que les turbomoteurs modernes pour aéronefs sont performants, mais volumineux, ce qui accroît sensiblement la difficulté pour les installer sur ces aéronefs. Une telle difficulté d'installation est aggravée par la structure monobloc de ces turbomoteurs. Il en résulte qu'une telle installation doit fréquemment s'accompagner de modifications et d'adaptations importantes de la structure desdits aéronefs et notamment de la structure portante des moteurs.

Cependant, de telles modifications et adaptations peuvent ne pas être souhaitables, par exemple pour des questions techniques et des raisons évidentes de coût.

La présente invention a pour objet de remédier à cet inconvénient et notamment de faciliter l'installation de tels turbomoteurs sur un aéronef.

A cette fin, selon l'invention, le turbomoteur d'aéronef comportant :
- un générateur de flux chaud d'axe au moins sensiblement horizontal, accroché à la voilure dudit aéronef par l'intermédiaire d'au moins une attache ;
- une soufflante de flux froid d'axe au moins sensiblement horizontal, entraînée en rotation par ledit générateur de flux chaud ; et
- une nacelle entourant ledit générateur de flux chaud et ladite soufflante de flux froid et formant un canal de flux froid à section annulaire autour dudit générateur de flux chaud,
est remarquable en ce qu'il comporte des moyens aptes à décaler l'axe de ladite soufflante transversalement à l'axe dudit générateur de flux chaud.

Ainsi, grâce à l'invention, on peut adapter la structure et la forme du turbomoteur, afin de faciliter son installation sur un aéronef.

Dans le cas où la soufflante est entraînée en rotation par le générateur de flux chaud par l'intermédiaire d'un mécanisme réducteur, lesdits moyens de décalage sont avantageusement constitués, au moins en partie, par ledit mécanisme réducteur, afin de permettre le décalage de l'axe de ladite soufflante transversalement à l'axe dudit générateur de flux chaud

Ledit mécanisme réducteur peut comporter un réducteur épicycloïdal et un réducteur droit.

Bien entendu, la présente invention concerne, de plus, l'utilisation du turbomoteur d'aéronef tel que décrit précédemment.

Avantageusement, lorsque ledit turbomoteur est suspendu à la voilure dudit aéronef par l'intermédiaire d'un mât de suspension, l'axe de ladite soufflante peut être décalé vers le haut transversalement à l'axe dudit générateur de flux chaud, de manière à augmenter la garde au sol dudit turbomoteur.

Ainsi, dans le cas particulier de la remotorisation d'un aéronef, l'invention permet de remplacer ses turbomoteurs existants par de nouveaux turbomoteurs modernes (généralement plus volumineux), tout en conservant à l'identique la structure portante d'origine des turbomoteurs. En effet, le décalage vers le haut de la soufflante du turbomoteur permet de relever la nacelle, sans modification de la structure portante du moteur. La garde au sol du turbomoteur est alors augmentée d'une valeur égale au décalage de l'axe de la soufflante.

En variante, lorsque ledit turbomoteur est monté sur la voilure dudit aéronef, l'axe de ladite soufflante peut être décalé vers le haut transversalement à l'axe dudit générateur de flux chaud, de manière décaler l'entrée d'air dudit turbomoteur vers l'extérieur. On augmente ainsi le volume d'air apte à traverser l'entrée d'air dudit turbomoteur, ce qui en améliore les performances.

Dans une autre variante de la présente invention, ledit turbomoteur étant suspendu sous la voilure dudit aéronef, l'axe de ladite soufflante peut être décalé vers le bas transversalement à l'axe dudit générateur de flux chaud, de manière décaler l'entrée d'air dudit turbomoteur vers l'extérieur pour augmenter le volume d'air pénétrant dans ce dernier.

Par ailleurs, la présente invention concerne encore un aéronef qui comporte au moins un turbomoteur tel que décrit précédemment.
Les figures du dessin annexé feront bien comprendre comment l'invention peut être réalisée. Sur ces figures, des références identiques désignent des éléments semblables.
La figure 1 est une vue schématique de côté, en coupe longitudinale, d'un turbomoteur suspendu sous l'aile d'un aéronef par l'intermédiaire d'un mât de suspension.
La figure 2 est semblable à la figure 1, le turbomoteur d'aile étant conforme à un exemple de réalisation de la présente invention.
La figure 3 présente, selon une vue schématique de côté, le turbomoteur d'aile de la figure 1 (en trait mixte), ainsi que le turbomoteur d'aile de la figure 2 (en trait plein) conforme à la présente invention.
La figure 4 est une vue schématique de côté, en coupe longitudinale, d'un turbomoteur monté sur la voilure d'un aéronef, selon un autre exemple de réalisation conforme à la présente invention.
La figure 5 montre, dans une vue schématique de côté, une coupe longitudinale d'un turbomoteur suspendu sous la voilure d'un aéronef, selon encore un autre exemple de réalisation conforme à la présente invention.

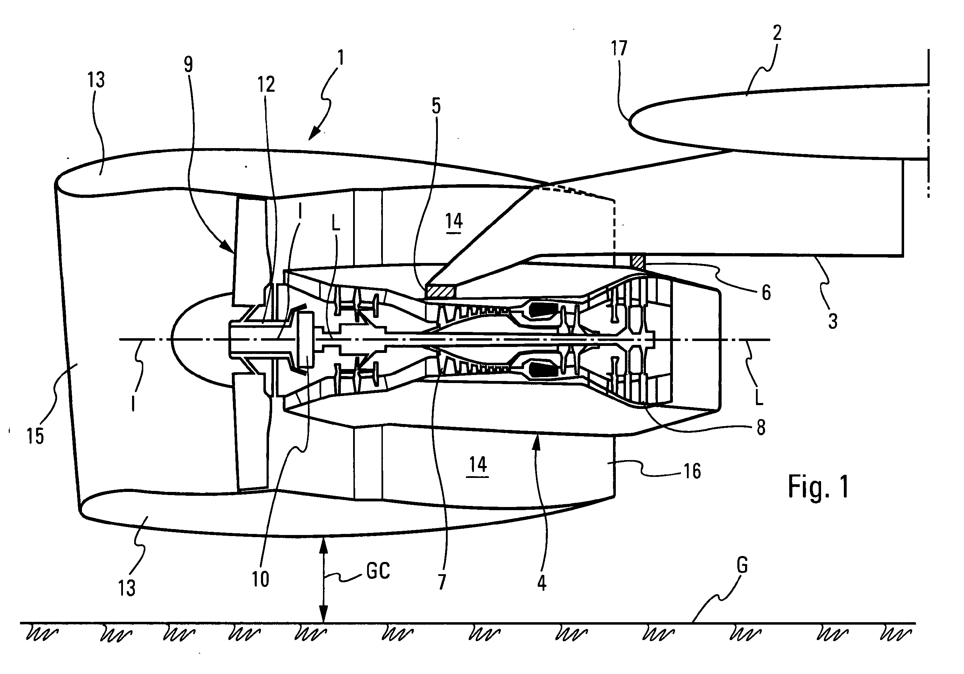

Dans un exemple de réalisation de turbomoteur d'aéronef conforme à l'invention décrite en relation avec les figures 1 à 3, on considère la remotorisation d'un aéronef avec des moteurs modernes et performants, sans modification de la structure portante des turbomoteurs d'origine (moins performants), et notamment sans modification des ailes, des mâts de suspension, des attaches sur ces mâts qui restent inchangés. Une telle remotorisation peut être requise afin, par exemple, de réduire la consommation en carburant de l'aéronef, d'augmenter sa puissance accessible, de diminuer ses émissions sonores, etc...

Sur la figure 1, on a représenté un turbomoteur à double flux 1 accroché à l'aile 2 d'un aéronef par l'intermédiaire d'un mât de suspension 3.

De façon usuelle, comme le montre la figure 1, le turbomoteur à double flux 1 comporte :
- un générateur de flux chaud 4 d'axe L-L, au moins sensiblement horizontal. Le générateur 4 est accroché par l'intermédiaire d'une attache avant 5 et d'une attache arrière 6 au mât de suspension 3. L'attache avant 5 et l'attache arrière 6 sont fixées sur le générateur 4 au niveau respectivement d'un compresseur haute-pression 7 et d'une turbine basse-pression 8 dudit générateur 4 ;
- une soufflante de flux froid 9 d'axe I-I, au moins sensiblement horizontal. L'axe I-I de la soufflante 9 est confondu avec l'axe L-L du générateur de flux chaud 4. Ce dernier entraîne en rotation ladite soufflante 9, par l'intermédiaire d'un mécanisme réducteur 10 (par exemple un réducteur épicycloïdal à engrenages) qui relie mécaniquement l'arbre d'entraînement 11 du générateur 4 à l'arbre d'entraînement 12 de la soufflante 9, la vitesse de rotation de la soufflante 9 étant inférieure à celle du générateur 4; et
- une nacelle 13 qui entoure le générateur de flux chaud 4 et la soufflante de flux froid 9 et qui forme un canal de flux froid 14, axisymétrique par rapport à l'axe I-I ou L-L et à section annulaire autour dudit générateur 4. La nacelle 13 est délimitée à ses extrémités, respectivement par un orifice 15 d'entrée d'air et par un orifice 16 de sortie du flux froid qui se trouve en avant du bord d'attaque 17 de l'aile 2.

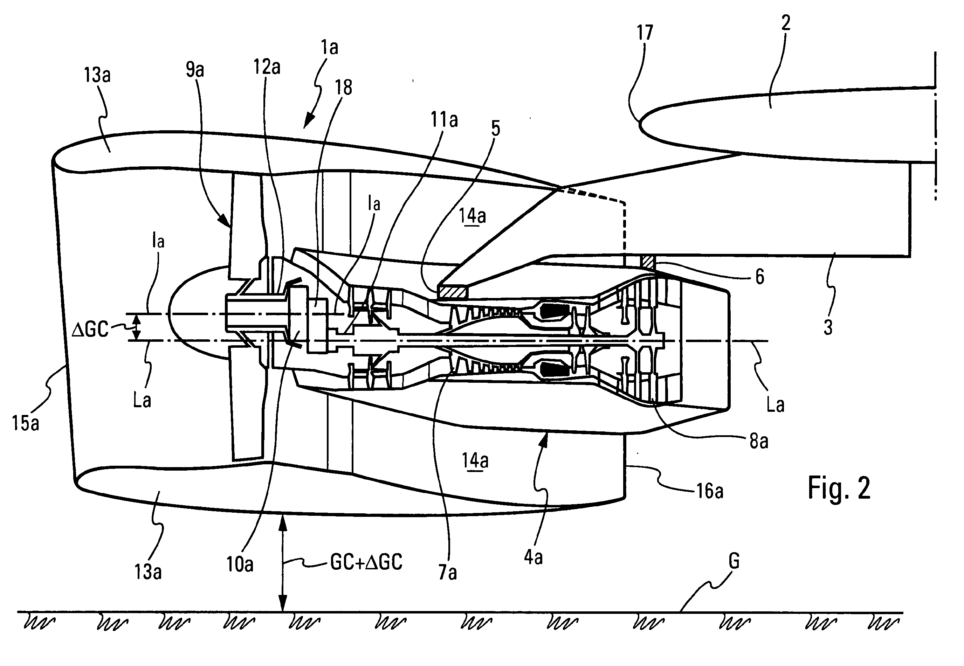

A titre d'exemple numérique illustratif, mais non limitatif, la garde au sol d'un tel turbomoteur à double flux 1 (c'est-à-dire l'écart entre le sol G et le point le plus bas de la nacelle 13), notée GC sur la figure 2, peut être égale à 523 mm.

Selon l'invention, comme le montre la figure 2 (sur laquelle les éléments correspondant au turbomoteur de la figure 1 portent respectivement la même référence, mais affectée de l'indice a), on a décalé vers le haut l'axe la-la de la soufflante 9a transversalement à l'axe La-La du générateur de flux chaud 4, en conservant à l'identique les caractéristiques du mât de suspension 3 et les points d'attache 5 et 6 de l'aéronef (figure 1).

Pour ce faire, le mécanisme réducteur usuel 10 de la figure 1 a été remplacé par un mécanisme réducteur adapté qui comporte, par exemple, un réducteur épicycloïdal 10a et un réducteur droit 18 associés l'un à l'autre. En outre, le réducteur épicycloïdal 10a et le réducteur droit 18 sont directement reliés respectivement à l'arbre d'entraînement 12a de la soufflante 9a et à l'arbre d'entraînement 1 1 a du générateur de flux chaud 4a. Bien entendu, d'autres mécanismes réducteur sont également envisageables.

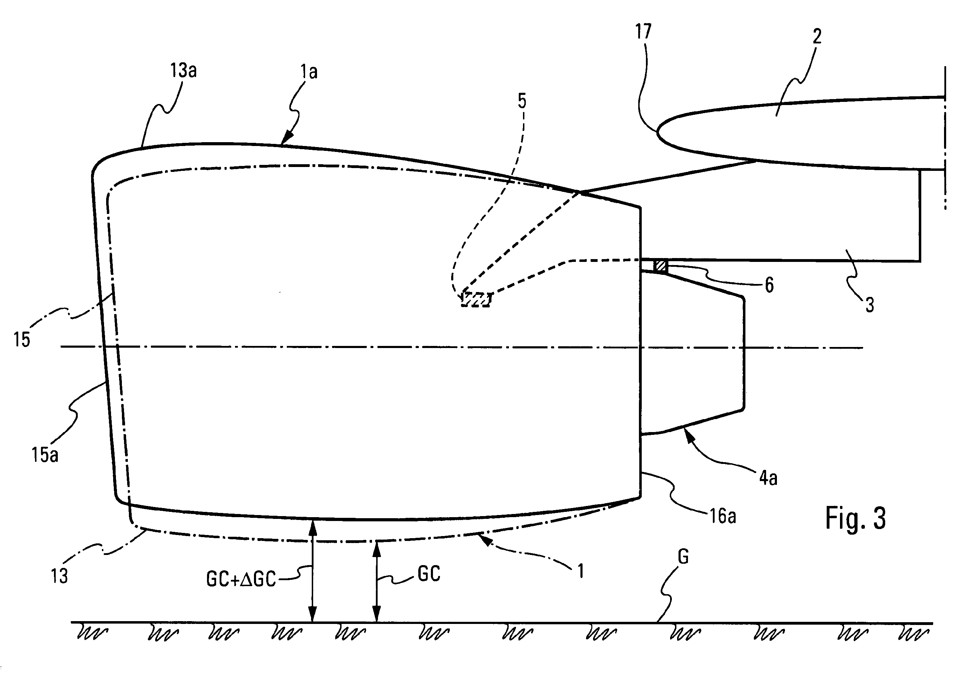

Comme le montrent les figures 2 et 3, le décalage vers le haut de la soufflante 9a permet de relever la nacelle 13a du turbomoteur 1a d'une valeur égale au décalage de l'axe la-la, sans modification du mât de suspension 3 ni des attaches 5 et 6. Il résulte, du décalage de la soufflante 9a, une modification du canal annulaire de flux froid 14a qui n'est plus axisymétrique.

Ainsi, grâce à l'invention, la garde au sol du turbomoteur 1a est augmentée de ΔGC, ce qui correspond à la valeur du décalage vers le haut de l'axe la-la de la soufflante 9a.

Selon l'exemple numérique précité, ce décalage peut être égal à 15 mm, de sorte que la garde au sol GC+ΔGC du turbomoteur 1a devient égale à 673 mm.

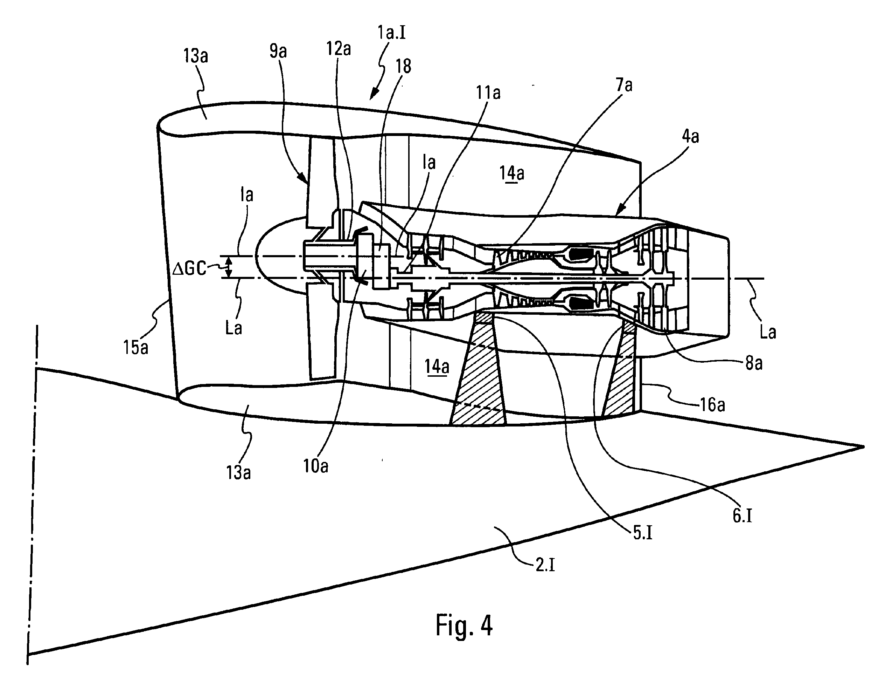

Dans un autre exemple de réalisation conformément à la présente invention illustrée sur la figure 4, le turbomoteur 1a.I est monté sur la voilure 2.1 d'un aéronef. Son générateur de flux chaud est accroché à la voilure 2.1 par l'intermédiaire d'attaches avant 5.I et arrière 6.I. L'axe la-la de la soufflante 9a est décalé vers le haut de ΔGC, transversalement à l'axe La-La du générateur de flux chaud 4a, de manière à augmenter sensiblement le volume d'air traversant l'entrée d'air 15a. Ainsi faisant, on améliore le remplissage en air du turbomoteur 1a.I.

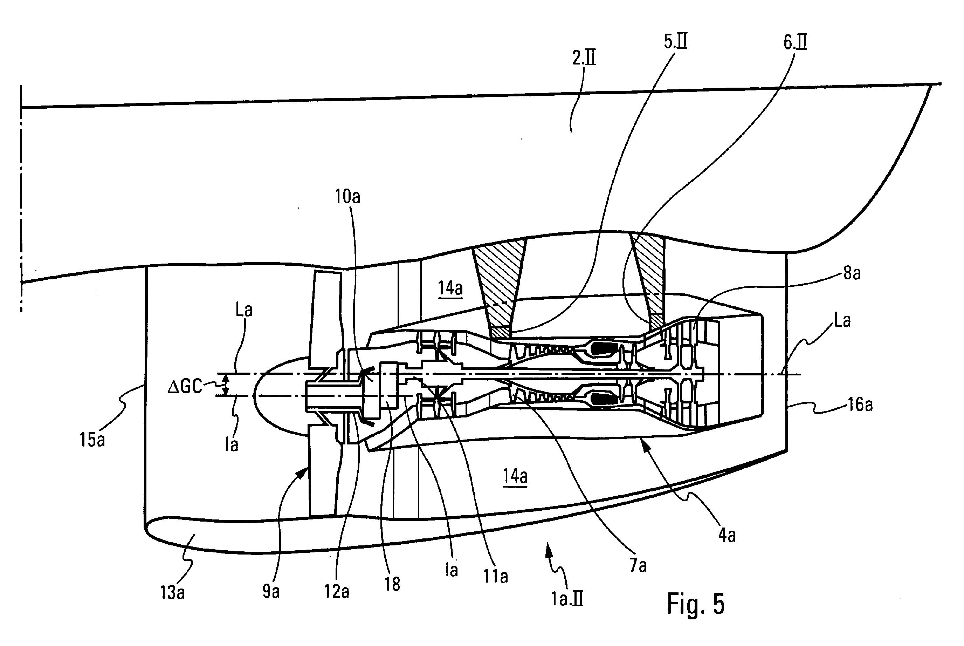

Par ailleurs, comme le montre la figure 5, encore un autre exemple de réalisation de la présente invention met en oeuvre un turbomoteur 1a.II sous une aile 2.II d'aéronef. Ce turbomoteur 1a.II est accroché sous l'aile 2.II par l'intermédiaire d'une attache avant 5.II et d'une arrière 6.II, fixées sur le générateur de flux chaud 4a. L'axe la-la de la soufflante 9a est décalé vers le bas de ΔGC, transversalement à l'axe La-La du générateur de flux chaud 4a, de manière à augmenter sensiblement le volume d'air traversant l'entrée d'air 15a. Le remplissage en air du turbomoteur 1a.I est ainsi amélioré.

## Revendications

1. Turbomoteur d'aéronef comportant :
- un générateur de flux chaud d'axe au moins sensiblement horizontal, accroché à la voilure dudit aéronef par l'intermédiaire d'au moins une attache ;
- une soufflante de flux froid d'axe au moins sensiblement horizontal, entraînée en rotation par ledit générateur de flux chaud ; et
- une nacelle entourant ledit générateur de flux chaud et ladite soufflante de flux froid et formant un canal de flux froid à section annulaire autour dudit générateur de flux chaud,
**caractérisé en ce qu'**il comporte des moyens (10a, 18) aptes à décaler l'axe (la-la) de ladite soufflante (9a) transversalement à l'axe (La-La) dudit générateur de flux chaud (4a).

2. Turbomoteur d'aile d'aéronef selon la revendication 1, dans lequel ladite soufflante est entraînée en rotation par ledit générateur de flux chaud par l'intermédiaire d'un mécanisme réducteur,
**caractérisé en ce que** lesdits moyens de décalage sont constitués, au moins en partie, par ledit mécanisme réducteur (10a, 18), afin de permettre le décalage de l'axe (la-la) de ladite soufflante (9a) transversalement à l'axe (La-La) dudit générateur de flux chaud (4a).

3. Turbomoteur d'aile d'aéronef selon la revendication 2, **caractérisé en ce que** ledit mécanisme réducteur (10a, 18) comporte un réducteur épicycloïdal (10a) et un réducteur droit (18).

4. Utilisation d'un turbomoteur d'aéronef tel que spécifié sous l'une des revendications 1 à 3, pour laquelle ledit turbomoteur est suspendu à la voilure (2) dudit aéronef par l'intermédiaire d'un mât de suspension (3),
**caractérisée en ce que** l'axe de ladite soufflante (9a) est décalé vers le haut transversalement à l'axe dudit générateur (4a) de flux chaud, de manière à augmenter la garde au sol dudit turbomoteur (1a).

5. Utilisation d'un turbomoteur d'aéronef tel que spécifié sous l'une des revendications 1 à 3,
**caractérisée en ce que**, ledit turbomoteur (1a.I) étant monté sur la voilure (2.I) dudit aéronef, l'axe (la-la) de ladite soufflante (9a) est décalé vers le haut transversalement à l'axe (La-La) dudit générateur (4a) de flux chaud, de manière décaler l'entrée d'air (15a) dudit turbomoteur (1a.I) vers l'extérieur.

6. Utilisation d'un turbomoteur d'aéronef tel que spécifié sous l'une des revendications 1 à 3,
**caractérisée en ce que**, ledit turbomoteur (1a.II) étant suspendu sous la voilure (2.II) dudit aéronef, l'axe (la-la) de ladite soufflante (9a) est décalé vers le bas transversalement à l'axe (La-La) dudit générateur (4a) de flux chaud, de manière décaler l'entrée d'air (15a) dudit turbomoteur (1a.I) vers l'extérieur.

7. Aéronef,
**caractérisé en ce qu'**il comporte au moins un turbomoteur (1a) tel que spécifié sous l'une des revendications 1 à 3.

## Patentansprüche

1. Triebwerk für ein Flugzeug mit:
- einem Heißluftstrom-Generator mit einer zumindest im Wesentlichen horizontalen Achse, der an der Tragfläche des Flugzeugs mit Hilfe mindestens eines Befestigungselements befestigt ist;
- einem Kaltluftstrom-Gebläse mit einer zumindest im Wesentlichen horizontalen Achse, das durch den Heißluftstrom-Generator zur Drehung angetrieben wird; und
- einer Gondel, die den Heißluftstrom-Generator und das Kaltluftstrom-Gebläse umgibt und einen Kaltluftstrom-Kanal mit ringförmigem Querschnitt um den Heißluftstrom-Generator herum bildet,
**dadurch gekennzeichnet, dass** es Mittel (10a, 18) aufweist, die dafür geeignet sind, die Achse (Ia-Ia) des Gebläses (9a) in Querrichtung zu der Achse (La-La) des Heißluftstrom-Generators (4a) zu verschieben.

2. Triebwerk für eine Flugzeug-Tragfläche nach Anspruch 1, wobei das Gebläse durch den Heißluftstrom-Generator mit Hilfe eines Getriebemechanismus zur Drehung antrieben wird, **dadurch gekennzeichnet, dass** die Verschiebemittel, zumindest teilweise, von dem Getriebemechanismus (10a, 18) gebildet sind, um die Verschiebung der Achse (Ia-Ia) des Gebläses (9a) in Querrichtung zu der Achse (La-La) des Heißluftstrom-Generators (4a) zu ermöglichen.

3. Triebwerk für eine Flugzeug-Tragfläche nach Anspruch 2, **dadurch gekennzeichnet, dass** der Getriebemechanismus (10a, 18) ein epizykloidisches Getriebe (10a) und ein Stirnradgetriebe (18) aufweist.

4. Verwendung eines Flugzeug-Triebwerks, wie in einem der Ansprüche 1 bis 3 spezifiziert, bei dem das Triebwerk an der Tragfläche (2) des Flugzeugs mit Hilfe eines Aufhängungsmasts (3) aufgehängt ist, **dadurch gekennzeichnet, dass** die Achse des Gebläses (9a) in Querrichtung zu der Achse des Heißluftstrom-Generators (4a) nach oben verschoben ist, derart, dass sie die Bodenfreiheit des Triebwerks (1a) erhöht.

5. Verwendung eines Flugzeug-Triebwerks, wie in einem der Ansprüche 1 bis 3 spezifiziert, **dadurch gekennzeichnet, dass**, da das Triebwerk (1a.I) an der Tragfläche (2.1) des Flugzeugs montiert ist, die Achse (Ia-Ia) des Gebläses (9a) in Querrichtung zu der Achse (La-La) des Heißluftstrom-Generators (4a) nach oben verschoben ist, derart, dass sie den Lufteinlass (15a) des Triebwerks (1a.I) nach außen verschiebt.

6. Verwendung eines Flugzeug-Triebwerks, wie in einem der Ansprüche 1 bis 3 spezifiziert, **dadurch gekennzeichnet, dass**, da das Triebwerk (1a.II) unter der Tragfläche (2.II) des Flugzeugs aufgehängt ist, die Achse (Ia-Ia) des Gebläses (9a) in Querrichtung zu der Achse (La-La) des Heißluftstrom-Generators (4a) nach unten verschoben ist, derart, dass sie den Lufteinlass (15a) des Triebwerks (1a.I) nach außen verschiebt.

7. Flugzeug **dadurch gekennzeichnet, dass** es zumindest ein Triebwerk (1a) aufweist, wie in einem der Ansprüche 1 bis 3 spezifiziert.

## Claims

1. An aircraft turbine engine comprising:
- a hot flow generator with an at least substantially horizontal axis, fastened to the airfoil of said aircraft via at least one fastener;
- a cold flow blower with an at least substantially horizontal axis, being rotated by said hot flow generator; and
- a pod surrounding said hot flow generator and said cold flow blower and forming a cold flow channel with an annular section around said hot flow generator,
**characterized in that** it comprises means (10a, 18) being able to shift the axis (la-la) of said blower (9a) transverse to the axis (La-La) of said hot flow generator (4a).

2. The aircraft wing turbine engine according to claim 1, wherein said blower is rotated by said hot flow generator through a reducing mechanism, ch
aracterized in that said shifting means consist in, at least in part, said reducing mechanism (10a, 18), so to allow for the shifting of the axis (Ia-la) of said blower (9a) transverse to the axis (La-La) of said hot flow generator (4a).

3. The aircraft wing turbine engine according to claim 2,
**characterized in that** said reducing mechanism (10a, 18) comprises an epicycloidal reducer (10a) and a straight reducer (18).

4. A use of an aircraft turbine engine such as specified in any of claims 1 to 3, for which said turbine engine is hung to the airfoil (2) of said aircraft by means of a suspension pylon (3), ch
aracterized in that the axis of said blower (9a) is shifted upwards transverse to the axis of said hot flow generator (4a) so as to increase the ground clearance of said turbine engine (1a).

5. The use of an aircraft turbine engine, as specified in any of claims 1 to 3,
**characterized in that**, said turbine engine (1a.I) being mounted on the airfoil (2.I) of said aircraft, the axis (la-la) of said blower (9a) is shifted upwards transverse to the axis (La-La) of said hot flow generator (4a) so as to shift the air input (15a) from said turbine engine (1a.I) to the exterior.

6. The use of an aircraft turbine engine, as specified in any of claims 1 to 3,
**characterized in that**, said turbine engine (1a.II) being hung under the airfoil (2.II) of said aircraft, the axis (la-la) of said blower (9a) is shifted downwards transverse to the axis (La-La) of said hot flow generator (4a) so as to shift the air input (15a) from said turbine engine (1a.II) to the exterior.

7. An aircraft,
**characterized in that** it comprises at least one turbine engine (1a) such as specified in any of claims 1 to 3.
